# FASCICULE DE BREVET EUROPEEN

(11) **EP 3 156 285 B1**
(45) Date de publication et mention de la délivrance du brevet: **05.08.2020**
(21) Numéro de dépôt: 16193722.2
(22) Date de dépôt: 13.10.2016
(51) Int. Cl.: B60R 7/04, B60R 7/06, B60N 3/10, B60R 7/02

(54) **AMÉNAGEMENT INTÉRIEUR DE VÉHICULE**
INNENAUSSTATTUNG EINES FAHRZEUGS
INSIDE ARRANGEMENT OF A VEHICLE

(30) Priorité: 15.10.2015 FR 1559787
(43) Date de publication de la demande: 19.04.2017
(73) Titulaire: NOVARES FRANCE, 92140 Clamart (FR)
(72) Inventeur: AILLAUD, Thierry, 06100 NICE (FR); BOLLIER, François, 06300 NICE (FR); MEIGNAN, David, 06380 SOSPEL (FR)
(74) Mandataire: Delorme, Nicolas

(56) Documents cités:
- WO-A1-88/00895
- DE-A1- 10 023 068
- DE-A1-102004 057 736
- DE-A1-102010 020 134
- FR-A1- 2 885 870

## Description

La présente invention concerne un aménagement intérieur d'un véhicule.

De façon traditionnelle, les habitacles sont pourvus de cavités de rangement. Dans certains cas, ces cavités sont ouvertes, mais dans d'autres cas elles peuvent être fermées. Un aménagement intérieur conforme au préambule de la revendication 1 a notamment été décrit dans la demande de brevet DE 100 23 068.

Ainsi, par exemple, la planche de bord des véhicules est généralement composée par des panneaux d'habillage ayant un rôle esthétique et d'intégration de différentes fonctionnalités comme, la présentation du tableau de bord, la protection des passagers en cas de choc - en particulier un coussin de sécurité gonflable - et la fermeture de la boite à gants.

Il existe des boites à gants sans porte. De telles boites à gants ne permettent pas de maintenir les objets en place dans la boite à gants, ni de les cacher à la vue de personnes extérieures au véhicule.

De nombreuses boites à gants sont fermées par une porte mobile.

Les portes mobiles sont majoritairement formées par injection plastique ou par thermoformage de matériaux thermoplastiques. Ces modes de fabrication conduisent à former des portes mobiles rigides.

Lorsque de telles portes sont intégrées dans un véhicule de petite taille, la rigidité de la porte mobile peut être, lors de son ouverture, une source d'inconfort pour un passager du véhicule.

La proximité de la porte rigide de la boite à gants avec les genoux d'un passager avant impose le respect d'un cahier des charges dit « choc genou » pour ne pas blesser irrémédiablement le passager lors d'un accident.

Des perfectionnements ont été apportés de manière générale aux boites à gants. Ainsi, on connaît par exemple le document US 8 172 297 qui présente une boite à gants comprenant une porte mobile ajustable entre plusieurs positions.

Cependant, cette boite à gants comprend une porte rigide présentant les inconvénients précités.

Les boites à gants sont généralement fabriquées par injection plastique ou par thermoformage. Puis sont acheminées par lots sur la chaine d'assemblage des véhicules. D'une manière traditionnelle, les boites à gants sont rangées dans un contenant pour être transportées. La géométrie des portes rigides associées aux boites à gants ne permet pas un empilement compact et engendre le transport d'ensembles volumineux contenant de grandes quantités de vide.

Il apparaît donc que dans le domaine des aménagements intérieurs de véhicule, il subsiste un certain nombre d'insuffisances concernant la fabrication et le fonctionnement des rangements.

Dans ce contexte technique, l'invention a pour but de fournir un aménagement intérieur qui permette de fermer un rangement tout en facilitant le transport dudit rangement.

Selon une définition générale, l'invention concerne un aménagement intérieur, qui comprend les caractéristiques techniques de la revendication 1.

Ainsi, la nappe souple permet de fermer l'ouverture du rangement. De plus, la nappe souple permet de faciliter le transport du rangement, en ne gênant pas l'empilement de plusieurs rangements. En outre, la nappe souple permet de fermer l'ouverture du rangement, en minimisant la masse du rangement, une porte souple étant plus légère qu'une porte rigide.

L'invention propose donc un aménagement intérieur qui permet de fermer l'ouverture du rangement et d'en faciliter le transport.

La nappe souple peut comprendre au moins un organe rigidifiant.

L'organe rigidifiant peut permettre de maximiser la tension de la nappe souple en position de fermeture.

Le, ou chaque, organe rigidifiant peut comprendre au moins une latte.

Le, ou chaque, organe rigidifiant peut comprendre au moins un portique.

Le, ou chaque, portique comprend au moins une barre transversale fixée à la nappe souple et au moins une patte présentant une extrémité articulée à l'encadrement de l'ouverture du rangement.

Avantageusement, l'articulation de la nappe souple à l'encadrement de l'ouverture du rangement peut être réalisée directement par la nappe souple.

Les moyens de fixation comprennent au moins une baguette configurée pour coopérer avec au moins une encoche de l'encadrement de l'ouverture du rangement.

L'encadrement de l'ouverture du rangement présente plusieurs encoches permettant d'accueillir la baguette, pour varier le recouvrement de l'ouverture par la nappe souple.

Selon une disposition particulière, la portion de liaison peut être surmoulée sur l'encadrement de l'ouverture du rangement.

Selon une disposition particulière, la portion de liaison peut être fixée, sur l'encadrement de l'ouverture du rangement, par des moyens de fixation amovibles.

La portion de liaison peut être positionnée dans la cuve, pour qu'une région de la nappe souple soit une paroi de la cuve.

La nappe souple peut comprendre un textile.

De plus, le textile peut comprendre un matériau élastique.

Selon un mode de réalisation, le rangement peut être une boite à gants.

D'autres caractéristiques et avantages de la présente invention se dégageront de la description qui va suivre, en regard des dessins annexés qui représentent à titre d'exemple non limitatif cinq formes de réalisations d'aménagement intérieur d'un véhicule.
- La figure 1 est une vue en perspective d'un exemple d'un aménagement intérieur.
- La figure 2 est une vue en coupe, schématique, d'un exemple d'un aménagement intérieur.
- La figure 3 est une vue en perspective d'un exemple d'un aménagement intérieur.
- La figure 4 est une vue en coupe, schématique, d'un exemple d'un aménagement intérieur.
- La figure 5 est une vue en perspective d'un aménagement intérieur selon l'invention.
- La figure 6 est une vue en coupe, schématique, d'un aménagement intérieur selon l'invention.
- La figure 7 est une vue en perspective d'un exemple d'un aménagement intérieur.
- La figure 8 est une vue en coupe, schématique, d'un exemple d'un aménagement intérieur.
- La figure 9 est une vue en perspective d'un exemple d'un aménagement intérieur.
- La figure 10 est une vue en coupe, schématique, d'un exemple d'un aménagement intérieur.
- La figure 11 est une vue en coupe, schématique, d'un exemple d'un aménagement intérieur.

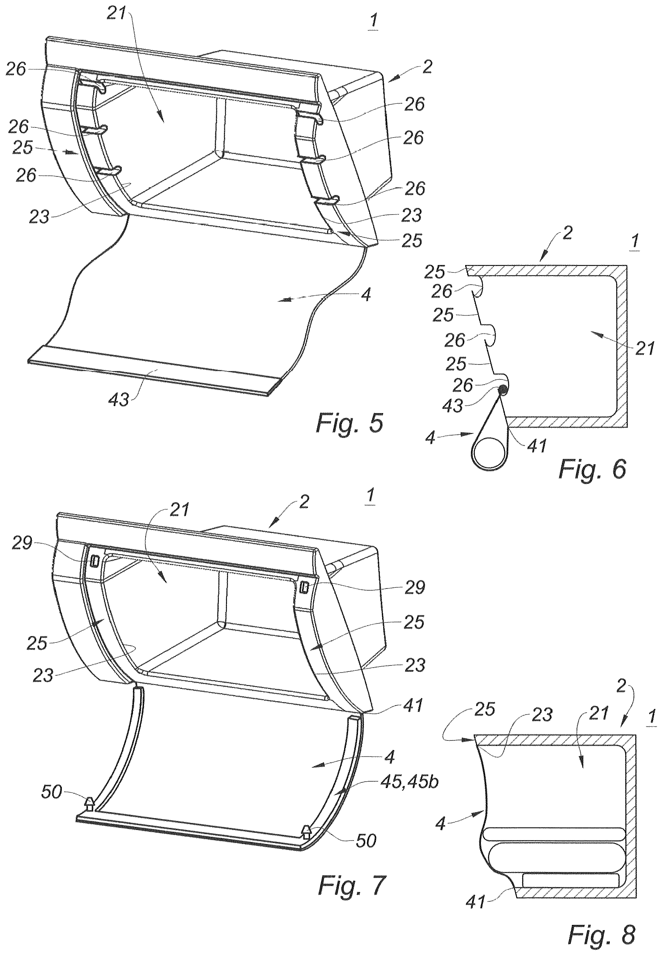

L'invention concerne un aménagement intérieur 1 représenté sur la figures 5 et 6.

L'aménagement intérieur 1 qui est logé dans une planche de bord et concerne ce qui est communément appelé une boite à gants.

L'aménagement intérieur 1 comprend essentiellement un rangement 2 et une nappe souple 4.

Le rangement 2 comprend une cuve 21, une ouverture 23 et un encadrement 25 de l'ouverture 23.

Le rangement 2 est conçu pour être intégré par exemple dans une planche de bord d'un véhicule, comme par exemple un véhicule automobile.

Le rangement 2 peut, par exemple, être réalisé par injection plastique ou par thermoformage d'un matériau thermoplastique.

La nappe souple 4 peut être réalisée en textile. Selon une disposition particulière, le textile de la nappe souple 4 peut comprendre des fibres élastiques.

Selon les modes de réalisation ici décrits, la nappe souple 4 présente une géométrie sensiblement parallélépipédique.

La nappe souple 4 présente une portion de liaison 41 au rangement 2 et des moyens de fixation amovible au rangement 2.

La nappe souple 4 est configurée pour être mobile entre une position de fermeture dans laquelle la nappe souple 4 recouvre, au moins partiellement, l'ouverture 23 du rangement 2 et une position d'ouverture dans laquelle la nappe souple 4 libère l'ouverture 23 du rangement 2.

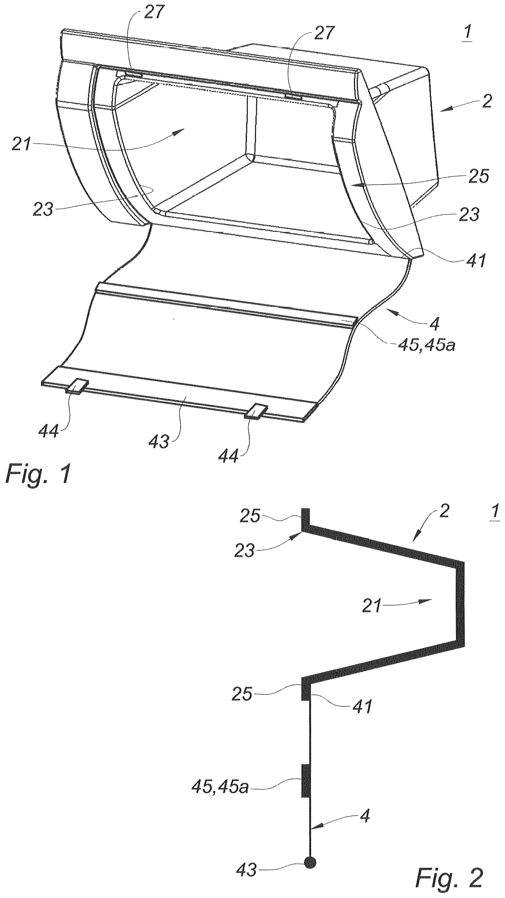

On peut se reporter aux figures 1 et 2 pour apprécier un premier mode de réalisation d'un aménagement intérieur.

Selon ce premier mode de réalisation, l'encadrement 25 de l'ouverture 23 présente deux logements pour ergots 27, positionnées par exemple au-dessus de l'ouverture 23.

Les moyens de fixation de la nappe souple 4 comprennent une baguette 43 présentant deux ergots 44. Les ergots 44 sont configurés pour être positionnés dans les logements pour ergots 27, pour maintenir la nappe souple 4 en position de fermeture.

De plus, la nappe souple 4 présente un organe rigidifiant 45.

Selon la disposition technique ici présentée, l'organe rigidifiant 45 est une latte 45a.

L'organe rigidifiant 45 permet de maximiser la tension de la nappe souple 4 en position de fermeture.

Selon le premier mode de réalisation la portion de liaison 41 de la nappe souple 4 peut être surmoulée à l'encadrement 25 de l'ouverture 23. Selon d'autres dispositions techniques, la portion de liaison 41 de la nappe souple 4 peut être soudée ou fixée par des moyens de fixation amovibles de type clippage, emboitement ou auto-agrippant.

La fixation de la nappe souple 4 par des moyens de fixation amovibles peut permettre de dissocier simplement la nappe souple 4 de l'encadrement 25 pour, par exemple, la nettoyer ou la remplacer suite à une dégradation ou dans le cas d'un changement de décor.

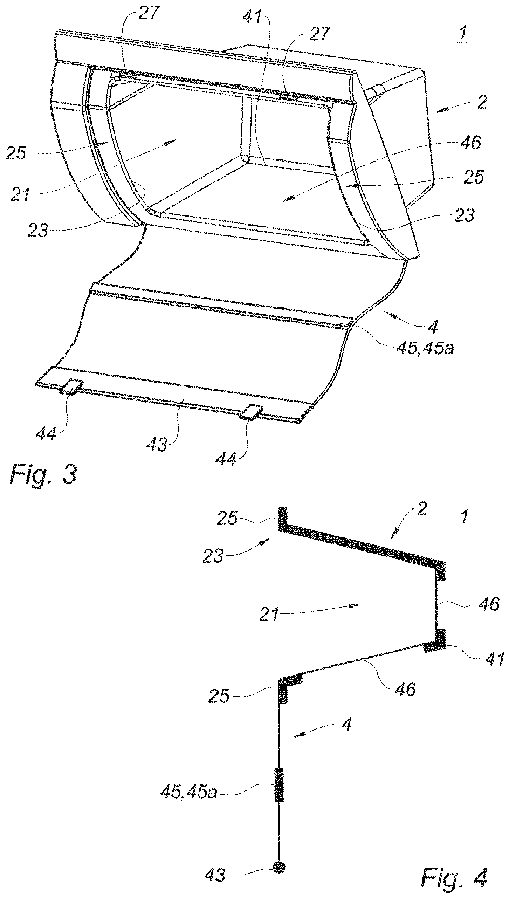

Les figures 3 et 4 présentent un deuxième mode de réalisation d'un aménagement intérieur.

Le deuxième mode de réalisation reprend l'ensemble des caractéristiques techniques du premier mode de réalisation mis à part le positionnement de la portion de liaison 41 de la nappe souple 4 par rapport au rangement 2.

Selon le deuxième mode de réalisation, la portion de liaison 41 est positionnée dans la cuve 21, pour qu'une région 46 de la nappe souple 4 soit une paroi de la cuve 21.

Les figures 5 et 6 présentent un troisième mode de réalisation, qui est celui le mode de réalisation selon l'invention.

Selon le troisième mode de réalisation, l'encadrement 25 de l'ouverture 23, présente six encoches 26, coaxiales deux-à-deux, réparties symétriquement de part et d'autre de l'ouverture 23.

Les moyens de fixation de la nappe 4 comprennent une baguette 43 configurée pour être engagée dans deux encoches 26 coaxiales.

Comme on peut l'observer sur la figure 6, d'une manière particulièrement avantageuse, la présence de six encoches 26, coaxiales deux à deux, permet à la nappe souple 4 de pouvoir être placée dans trois position successives de fermeture, pour varier le recouvrement de l'ouverture 23 par la nappe souple 4.

De plus, lorsque la nappe souple 4 est dans une position de fermeture dans laquelle l'ouverture 23 n'est pas entièrement recouverte, une région de la nappe souple 4 qui ne recouvre pas l'ouverture peut avoir une fonction de hamac de stockage.

Un quatrième mode de réalisation est présenté aux figures 7 et 8.

Selon le quatrième mode de réalisation, l'organe rigidifiant 45 comprend un portique 45b.

Le portique 45b est fixé sur le pourtour de la nappe souple 4.

De plus, le portique 45b permet de maintenir la nappe souple 4 en position de fermeture.

Le portique 45b permet aussi de donner une tension à la nappe souple.

Comme on peut l'observer sur la figure 7, le portique 45b peut comprendre deux dents 50 configurées pour être introduites dans deux logements pour dents 29 de l'encadrement 25 de l'ouverture 23, pour maintenir la nappe souple 4 en position de fermeture.En outre, selon le quatrième mode de réalisation la portion de liaison 41 de la nappe souple 4 est surmoulée à l'encadrement 25 de l'ouverture 23.

Avantageusement, la portion de liaison 41 de la nappe souple 4 peut aussi être soudée ou fixée par des moyens de fixation amovibles tels que cités pour le premier mode de réalisation.

Le portique 45b permet avantageusement de rigidifier la nappe souple 4 tout en permettant à une grande surface de la nappe souple 4 de conserver sa souplesse. Ainsi, comme on peut le voir sur la figure 8, en position de fermeture, des objets placés dans la cuve 21 peuvent déformer la nappe souple 4. Cette disposition technique permet de pouvoir stocker dans la cuve 21 des objets présentant des dimension légérement supérieures aux dimensions de la cuve 21.

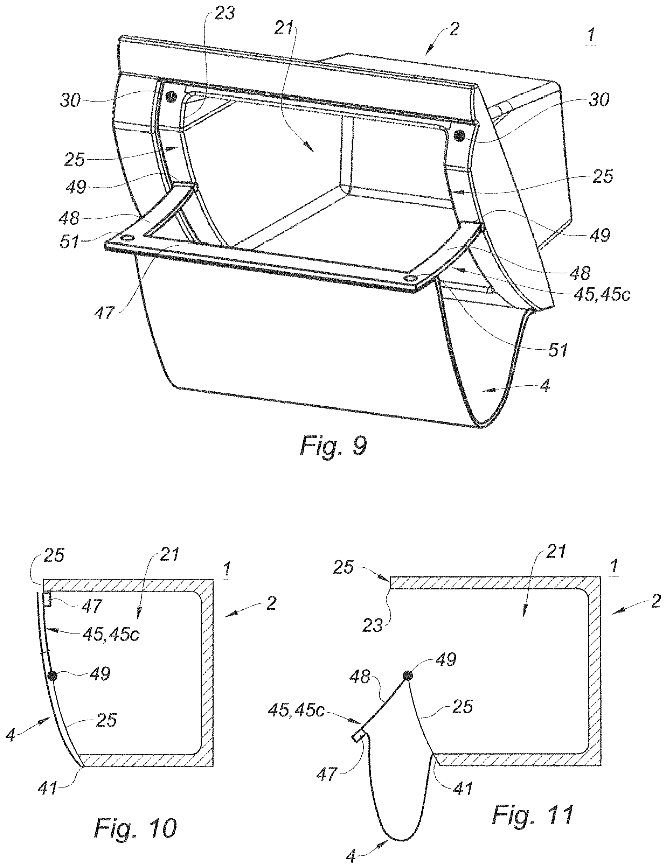

On peut se reporter aux figures 9 à 11 pour apprécier un cinquième mode de réalisation d'un aménagement intérieur.

Selon le cinquième mode de réalisation la portion de liaison 41 de la nappe souple 4 est surmoulée à l'encadrement 25 de l'ouverture 23.

Avantageusement, la portion de liaison 41 de la nappe souple 4 peut aussi être soudée ou fixée par des moyens de fixation amovibles tels que cités pour le premier mode de réalisation.

De plus, selon le cinquième mode de réalisation, l'organe rigidifiant 45 comprend un portique 45c.

Le portique 45c présente une barre transversale 47 et deux pattes 48 présentant chacune une extrémité 49.

La barre transversale 47 est fixée à une bordure de la nappe souple 4.

La barre transversale 47 peut comprendre deux pastilles métalliques 51 configurées pour coopérer avec deux aimants 30 positionnés sur l'encadrement 25 de l'ouveture 23. Les aimants 30 et les pastilles métalliques 51 permettent de maintenir la nappe souple 4 en position fermée.

L'extrémité 49 de chaque patte 48 est articulée à l'encadrement 25 de l'ouverture 23.

Comme on peut le voir sur les figures 10 et 11, cette disposition technique permet de maintenir la nappe souple en position de fermeture. De plus, cette disposition technique permet à la nappe souple 4 d'être pliée en position d'ouverture, de manière à avoir une fonction de hamac de stockage.

Ainsi, l'invention propose un aménagement intérieur 1 qui permet de fermer l'ouverture 23 du rangement 2 et d'en faciliter le transport vers une chaine d'assemblage.

## Revendications

1. Aménagement intérieur (1), qui comprend un rangement (2) présentant une cuve (21), une ouverture (23) et un encadrement (25) de l'ouverture (23), et (ii) une nappe souple (4) de recouvrement comprenant au moins une portion de liaison (41) au rangement (2) et des moyens de fixation amovible au rangement (2), la nappe souple (4) étant configurée pour être mobile entre une position de fermeture dans laquelle la nappe souple (4) recouvre, au moins partiellement, l'ouverture (23) du rangement (2) et une position d'ouverture dans laquelle la nappe souple (4) libère l'ouverture (23) du rangement(2), **caractérisé en ce que** les moyens de fixation comprennent au moins une baguette (43) configurée pour coopérer avec au moins une encoche (26) de l'encadrement de l'ouverture (23) du rangement (2), l'encadrement de l'ouverture (23) du rangement (2) présentant plusieurs encoches (26) permettant d'accueillir la baguette (43), pour varier le recouvrement de l'ouverture (23) par la nappe souple (4) et définir plusieurs positions de fermeture de la nappe souple (4), et **en ce que**, dans une desdites positions de fermeture, une région de la nappe souple (4) qui ne recouvre pas l'ouverture (23) du rangement (2) a une fonction de hamac de stockage.

2. Aménagement intérieur (1) selon la revendication 1, **caractérisé en ce que** la nappe souple (4) comprend au moins un organe rigidifiant (45).

3. Aménagement intérieur (1) selon la revendication 2, **caractérisé en ce que** le, ou chaque, organe rigidifiant (45) comprend au moins une latte (45a).

4. Aménagement intérieur (1) selon l'une des revendications 2 ou 3, **caractérisé en ce que** le, ou chaque, organe rigidifiant (45) comprend au moins un portique (45b-45c).

5. Aménagement intérieur (1) selon la revendication 4, **caractérisé en ce que** le, ou chaque, portique (45c) comprend au moins une barre transversale (47) fixée à la nappe souple (4) et au moins une patte (48) présentant une extrémité (49) articulée à l'encadrement (25) de l'ouverture (23) du rangement (2).

6. Aménagement intérieur (1) selon l'une des revendications 1 à 5, **caractérisé en ce que** la portion de liaison (41) est surmoulée sur l'encadrement (25) de l'ouverture (23) du rangement (2).

7. Aménagement intérieur (1) selon l'une des revendications 1 à 5, **caractérisé en ce que** la portion de liaison (41) est fixée, sur l'encadrement (25) de l'ouverture (23) du rangement (2), par des moyens de fixation amovibles.

8. Aménagement intérieur (1) selon l'une des revendications 1 à 7, **caractérisé en ce que** la portion de liaison (41) est positionnée dans la cuve (21), pour qu'une région (46) de la nappe souple (4) soit une paroi de la cuve (21).

9. Aménagement intérieur (1) selon l'une des revendications 1 à 7, **caractérisé en ce que** la nappe souple (4) comprend un textile.

10. Aménagement intérieur (1) selon la revendication 9, **caractérisé en ce que** le textile comprend un matériau élastique.

11. Aménagement intérieur (1) selon l'une des revendications 1 à 10, **caractérisé en ce que** le rangement (2) est une boîte à gants.

12. Aménagement intérieur (1) selon l'une des revendications 1 à 10, **caractérisé en ce que** le rangement (2) est positionné dans un coffre d'un véhicule.

## Patentansprüche

1. Innenausstattung (1), die eine Aufbewahrung (2) umfasst, aufweisend einen Behälter (21), eine Öffnung (23) und einen Rahmen (25) der Öffnung (23), und (ii) eine elastische Abdeckmatte (4), umfassend mindestens einen Verbindungsabschnitt (41) an der Aufbewahrung (2) und lösbare Befestigungsmittel an der Aufbewahrung (2), wobei die elastische Matte (4) ausgelegt ist, um zwischen einer geschlossenen Position, in welcher die elastische Matte (4) mindestens teilweise die Öffnung (23) der Aufbewahrung (2) bedeckt, und einer geöffneten Position, in welcher die elastische Matte (4) die Öffnung (23) der Aufbewahrung (2) freigibt, beweglich zu sein, **dadurch gekennzeichnet, dass** die Befestigungsmittel mindestens eine Stange (43) umfassen, die ausgelegt ist, um mit mindestens einer Kerbe (26) des Rahmens der Öffnung (23) der Aufbewahrung (2) zusammenzuwirken, wobei der Rahmen der Öffnung (23) der Aufbewahrung (2) mehrere Kerben (26) aufweist, die erlauben, die Stange (43) zu empfangen, um die Abdeckung der Öffnung (23) durch die elastische Matte (4) zu variieren und mehrere geschlossene Positionen der elastischen Matte (4) festzulegen, und dass in einer der geschlossenen Positionen eine Region der elastischen Matte (4), die die Öffnung (23) der Aufbewahrung (2) nicht bedeckt, eine Funktion einer Lager-Hängematte hat.

2. Innenausstattung (1) nach Anspruch 1, **dadurch gekennzeichnet, dass** die elastische Matte (4) mindestens ein Versteifungsorgan (45) umfasst.

3. Innenausstattung (1) nach Anspruch 2, **dadurch gekennzeichnet, dass** das oder jedes Versteifungsorgan (45) mindestens eine Latte (45a) umfasst.

4. Innenausstattung (1) nach einem der Ansprüche 2 oder 3, **dadurch gekennzeichnet, dass** das oder jedes Versteifungsorgan (45) mindestens ein Gerüst (45b-45c) umfasst.

5. Innenausstattung (1) nach Anspruch 4, **dadurch gekennzeichnet, dass** das oder jedes Gerüst (45c) mindestens eine Querstange (47) umfasst, die an der elastischen Matte (4) befestigt ist, und mindestens einen Schenkel (48), der ein Ende (49) aufweist, das mit dem Rahmen (25) der Öffnung (23) der Aufbewahrung (2) gelenkig verbunden ist.

6. Innenausstattung (1) nach einem der Ansprüche 1 bis 5, **dadurch gekennzeichnet, dass** der Verbindungsabschnitt (41) auf dem Rahmen (25) der Öffnung (23) der Aufbewahrung (2) aufgeformt ist.

7. Innenausstattung (1) nach einem der Ansprüche 1 bis 5, **dadurch gekennzeichnet, dass** der Verbindungsabschnitt (41) auf dem Rahmen (25) der Öffnung (23) der Aufbewahrung (2) durch lösbare Befestigungsmittel befestigt ist.

8. Innenausstattung (1) nach einem der Ansprüche 1 bis 7, **dadurch gekennzeichnet, dass** der Verbindungsabschnitt (41) im Behälter (21) positioniert ist, damit eine Region (46) der elastischen Matte (4) eine Wand des Behälters (21) ist.

9. Innenausstattung (1) nach einem der Ansprüche 1 bis 7, **dadurch gekennzeichnet, dass** die elastische Matte (4) ein Textil umfasst.

10. Innenausstattung (1) nach Anspruch 9, **dadurch gekennzeichnet, dass** das Textil ein elastisches Material umfasst.

11. Innenausstattung (1) nach einem der Ansprüche 1 bis 10, **dadurch gekennzeichnet, dass** die Aufbewahrung (2) ein Handschuhfach ist.

12. Innenausstattung (1) nach einem der Ansprüche 1 bis 10, **dadurch gekennzeichnet, dass** die Aufbewahrung (2) in einem Kofferraum eines Fahrzeugs positioniert ist.

## Claims

1. An interior arrangement (1), which comprises a stowage (2) having a shell (21), an opening (23) and a frame (25) of the opening (23), and (ii) a flexible cover fabric (4) comprising at least one portion (41) for connection to the stowage (2) and means for removable fastening to the stowage (2), the flexible fabric (4) being configured to be movable between a closed position in which the flexible fabric (4) covers, at least partially, the opening (23) of the stowage (2) and an open position in which the flexible fabric (4) clears the opening (23) of the stowage (2), **characterized in that** the fastening means comprise at least one stick (43) configured to cooperate with at least one notch (26) of the frame of the opening (23) of the stowage (2), the frame of the opening (23) of the stowage (2) having several notches (26) allowing receiving the stick (43), so as to vary the coverage of the opening (23) by the flexible fabric (4) and define several closed positions of the flexible fabric (4), and **in that**, in one of the said closed positions, a region of the flexible fabric (4) that does not cover the opening (23) of the stowage (2) has a function of a storage hammock.

2. The interior arrangement (1) according to claim 1, **characterized in that** the flexible fabric (4) comprises at least one stiffening member (45).

3. The interior arrangement (1) according to claim 2, **characterized in that** the, or each, stiffening member (45) comprises at least one slat (45a).

4. The interior arrangement (1) according to any of claims 2 or 3, **characterized in that** the, or each, stiffening member (45) comprises at least one gantry (45b-45c).

5. The interior arrangement (1) according to claim 4, **characterized in that** the, or each, gantry (45c) comprises at least one cross-bar (47) fastened to the flexible fabric (4) and at least one leg (48) having an end (49) hinged to the frame (25) of the opening (23) of the stowage (2).

6. The interior arrangement (1) according to any of claims 1 to 5, **characterized in that** the connecting portion (41) is overmolded on the frame (25) of the opening (23) of the stowage (2).

7. The interior arrangement (1) according to any of claims 1 to 5, **characterized in that** the connecting portion (41) is fastened, on the frame (25) of the opening (23) of the stowage (2), by removable fastening means.

8. The interior arrangement (1) according to any of claims 1 to 7, **characterized in that** the connecting portion (41) is positioned in the shell (21), so that a region (46) of the flexible fabric (4) is a wall of the shell (21).

9. The interior arrangement (1) according to any of claims 1 to 7, **characterized in that** the flexible fabric (4) comprises a textile.

10. The interior arrangement (1) according to claim 9, **characterized in that** the textile comprises an elastic material.

11. The interior arrangement (1) according to any of claims 1 to 10, **characterized in that** the stowage (2) is a glovebox.

12. The interior arrangement (1) according to any of claims 1 to 10, **characterized in that** the stowage (2) is positioned in a trunk of a vehicle.
